# EUROPÄISCHE PATENTSCHRIFT

(11) **EP 1 991 781 B1**
(45) Veröffentlichungstag und Bekanntmachung des Hinweises auf die Patenterteilung: **15.03.2017**
(21) Anmeldenummer: 07704007.9
(22) Anmeldetag: 19.01.2007
(51) Int. Cl.: F04B 35/04, F16C 32/06

(54) **LINEARVERDICHTER MIT GESINTERTER LAGERBUCHSE**
LINEAR COMPRESSOR WITH SINTERED BEARING BUSH
COMPRESSEUR LINÉAIRE À DOUILLE-PALIER FRITTÉE

(30) Priorität: 28.02.2006 DE 102006009268
(43) Veröffentlichungstag der Anmeldung: 19.11.2008
(73) Patentinhaber: BSH Hausgeräte GmbH, 81739 München (DE)
(72) Erfinder: SCHUBERT, Jan-Grigor, 89250 Senden (DE)
(86) Internationale Anmeldenummer: PCT/EP2007/050537
(87) Internationale Veröffentlichungsnummer: WO 2007/098993

(56) Entgegenhaltungen:
- GB-A- 2 108 595
- US-A- 2 855 249
- US-A- 4 873 913
- US-B1- 6 575 716

## Beschreibung

Die vorliegende Erfindung betrifft einen Linearverdichter umfassend ein Kolbengehäuse und einen darin entlang einer Achse hin und her beweglichen Verdichterkolben, wobei der Verdichterkolben in dem Kolbengehäuse mit Hilfe einer Öffnungen aufweisenden Gehäusewand und eines durch die Öffnungen strömenden Gases gelagert wird, ein Kältegerät, ein Verfahren zur Herstellung eines Linearverdichters.

Bei ölfreien Linearverdichtern ist es bekannt, einen Verdichterkolben durch ein Polster aus gasförmigem Kältemittel, das durch Mikrobohrungen durch eine Zylinderwand nach innen in den Zylinder einströmt, von der Zylinderwand zu trennen. Für eine derartige ölfreie Lagerung, die sog. Gasdrucklagerung, ist eine kontinuierliche Gaszufuhr für die Aufrechterhaltung des Polsters erforderlich. Ist das Gaspolster zu dünn oder inhomogen entsteht Reibung durch einen Kontakt des Verdichterkolbens an der Zylinderwand. Die Reibung führt zu Verschleiß und Leistungsverlust des Linearverdichters.

Bekannte Lösungen sehen für die Bildung des Gaspolsters eine Vielzahl von in die Zylinderwand eingebrachte Mikrobohrungen vor. Wie aus der US 6,575,716 bekannt ist, kann auch eine in der Zylinderwand umlaufende Nut mit einer zentralen Versorgungsbohrung vorgesehen sein. Die zentrale umlaufende Nut hat gegenüber den Mikrobohrungen den Nachteil einer über den Umfang ungleichmäßigen Tragkraft und eines höheren Gasverbrauchs. Die Mikrobohrungen hingegen sind der erhöhten Gefahr eines Verstopfens durch Verunreinigungen ausgesetzt und bedürfen eines vorgelagerten Filters für das Gas.

Aus GB 2 108 595 ist ein Gasdrucklager bekannt, bei dem die Öffnungen, durch die das Lagergas fließt, Poren sind.

Es ist Aufgabe der vorliegenden Erfindung, einen Linearverdichter und ein Kältegerät bereitzustellen, womit kostengünstig ein zuverlässiger Betrieb auch über einen langen Zeitraum realisiert werden kann.

Weiterhin ist es Aufgabe der vorliegenden Erfindung ein Verfahren zur Herstellung eines Linearverdichters bzw. eines Kältegeräts mit einem Linearverdichter anzugeben, wodurch auf einfache Weise kostengünstig ein Linearverdichter bzw. ein Kältegerät hergestellt werden kann, so dass ein zuverlässiger Betrieb auch über einen langen Zeitraum ermöglicht wird. Darüber hinaus ist es Aufgabe, ein Verfahren zum Kühlen von Waren anzugeben, welches ein besonders zügiges, zuverlässiges und energiesparendes Kühlen von Waren zulässt.

Diese Aufgaben werden erfindungsgemäß durch den Linearverdichter, durch das Kältegerät, durch das Verfahren zur Herstellung des Linearverdichters und durch das Verfahren zum Kühlen von Waren gelöst wie in den jeweiligen unabhängigen Ansprüchen angegeben. Weitere vorteilhafte Ausgestaltungen, die jeweils einzeln oder beliebig miteinander kombiniert werden können, sind Gegenstand der jeweilig abhängigen Ansprüche.

Der erfindungsgemäße Linearverdichter umfasst ein Kolbengehäuse und einen darin entlang einer Achse hin und her beweglichen Verdichterkolben, wobei der Verdichterkolben in dem Kolbengehäuse mit Hilfe einer Öffnungen aufweisenden Gehäusewand und eines durch die Öffnungen strömenden Gases gelagert wird, wobei die Gehäusewand porös ist. und der lokale Durchtrittsströmungswiderstand durch die Gehäusewand sich entlang der Achse des Kolbengehäuses ändert. Durch Anpassung der Porosität entlang der Achse kann den jeweiligen Lagerkräften Rechnung getragen werden, die je nach Lage des Verdichterkolbens verschieden sein können. Insbesondere in Bereichen, wo hohe Lagerkräfte erforderlich sind, ist ein vergleichsweise geringer lokaler Durchtrittswiderstand zu wählen, während in Bereichen, wo nur geringe Lagerkräfte auftreten, ein entsprechend größerer lokaler Durchtrittswiderstand vorgegeben werden kann. Mit Hilfe einer Profilierung des Strömungswiderstandes durch die Gehäusewand kann das Gaspolster angepasst werden. Hiermit kann der für eine hinreichende Lagerung erforderliche Gasverbrauch minimiert werden.

Der Verdichterkolben wird in dem Kolbengehäuse durch ein zwischen dem Verdichterkolben und dem Kolbengehäuse durch die Gasströmung aufgebautes Gaspolster gelagert. Hierzu wird Gas durch die Öffnungen einer Gehäusewand gepresst, welche als Lagerfläche für den Verdichterkolben dient. Die Öffnungen erlauben eine Zuführung von Gas und damit eine Lagerung an den Stellen, wo sonst ein Kontakt des Verdichterkolbens mit dem Kolbengehäuse zu Verschleiß führen würde. Um die Gasströmung aufzubauen, ist die Gehäusewand porös.

Der Ausdruck "porös" bedeutet in diesem Zusammenhang, dass die Öffnungen im Gegensatz zu den bekannten im wesentlichen gradlinig durch die Gehäusewand verlaufenden Bohrlöchern, die eine Gasströmung nur entlang der Bohrrichtung zulassen, auch eine seitliche Gasströmung aufnehmen können. Durch die Porosität kann das Gas innerhalb der Gehäusewand in verschiednen, insbesondere in mehr als zwei, Richtungen strömen. Insbesondere kann dass Gas auch parallel zu einer Oberfläche der Gehäusewand strömen. Die Gasströmung durch die poröse Gehäusewand kann diffusiv sein, d.h. die Richtung des strömenden Gases ändert sich lokal von Pore zu Pore und bleibt nicht im Wesentlichen unverändert wie bei einem Bohrloch, in dem sich eine Rohrströmung ausbildet. Die Porosität der Gehäusewand kann insbesondere durch eine granulare Struktur der Gehäusewand bewirkt sein. Die Porosität der Gehäusewand kann durch ein Verbinden einer Vielzahl kleiner Körner bewirkt werden, die miteinander verbacken oder gesintert werden.

Der Vorteil dieser Porosität ist, dass bei Verstopfen einer Pore eine Vielzahl benachbarter Poren zur Verfügung steht, in die der lokale Gasstrom umgeleitet werden kann. Eine lokale Verstopfung einer einzelnen Pore führt nicht wie bei den bekannten gebohrten Öffnungen zu einem Verstopfen des gesamten Kanals über die gesamte Dicke der Gehäusewand, sondern nur zu einem Verstopfen an der lokalen Stelle innerhalb der Gehäusewand. In der Folge ist die Gasdrucklagerung sehr viel weniger störanfällig gegenüber Verschmutzung. Ein vorgeschalteter Filter für das Gas kann entfallen. Durch eine geeignete Wahl der Porosität kann die Gasströmung durch die Gehäusewand sehr gleichmäßig vorgegeben werden, wodurch gleichmäßige Lagerkräfte bewirkt werden. Gleichmäßige Lagerkräfte bewirken eine gute Lagerführung und die Größe des für eine hinreichende Lagerung erforderlichen Gasstroms kann reduziert werden.

Vorteilhafterweise ist die Gehäusewand offenporig. Aufgrund der Offenporigkeit kann das Gas auf besonders einfache Weise quer zur Hauptströmungsrichtung des Gases durch die Gehäusewand innerhalb der Gehäusewand strömen, wenn eine Öffnung an einer Stelle verstopft. Durch die Eigenschaft der Gehäusewand, auch einen seitlichen Gasstrom zuzulassen wird die effektive Anzahl der gesamten für die Gasströmung zur Verfügung stehenden Strömungskanäle erheblich erhöht.

In einer besonderen Ausgestaltung ist die Gehäusewand gesintert.

Durch eine geeignete Wahl der relevanten Parameter während der Sinterung kann die Porosität und damit das Strömungsverhalten wie z.B. der Strömungswiderstand der Gehäusewand präzise auf die speziellen Bedürfnisse bei der Lagerung des Zylinderkolbens im Kolbengehäuse zugeschnitten werden.

In einer vorteilhaften Ausgestaltung ändert sich die Porosität, insbesondere der Materialanteil, der Gehäusewand entlang der Achse. Hierbei können die mittleren Porengrößen, die Verteilung der Porengrößen, das Verhältnis der offenen Poren zu den geschlossen Poren und der Anteil des Materials zu den Freiräumen, d.h. der Materialanteil, u.a. Parameter verändert werden. Der Materialanteil kann zwischen 70 % und 99%, insbesondere zwischen 80% und 90 %, betragen. Die Porosität kann beispielsweise durch die Wahl der miteinander im Sinterungsprozess zu verbindenden Körner oder durch das zeitliche Temperaturprofil während des Sinterprozesses beeinflusst werden.

Auch ist es vorteilhaft, die Stärke der Gehäusewand zu ändern. Über die Stärke der Gehäusewand kann ebenso Einfluss auf den lokalen Durchtrittsströmungswiderstand genommen bzw. das Profil der auf den Verdichterkolben wirkenden Lagerkräfte beeinflusst bzw. vorgegeben werden.

In einer speziellen Ausgestaltung ändert sich der Strömungswiderstand, insbesondere die Stärke der Gehäusewand, über die Länge des Kolbengehäuses in einem Bereich von 1,5 bis 6, insbesondere in einem Bereich von 2 bis 4.

Unter der Länge des Kolbengehäuses ist die Länge zu verstehen, die den Hub des Verdichterkolbens in dem Kolbengehäuse entspricht, d.h. die Länge über die eine Lagerung des Verdichterkolbens im Kolbengehäuse erforderlich ist.

Beispielsweise nimmt der lokale Durchtrittsströmungswiderstand entlang der Achse in Ausziehrichtung des Verdichterkolbens aus dem Kolbengehäuse zu. Dieser Anpassung des lokalen Durchtrittsströmungswiderstandes ist für jene Fälle geeignet, wo die für den Verdichterkolben erforderlichen Lagerkräfte im ausgezogenen Zustand des Verdichterkolbens aus dem Kolbengehäuse geringer sind als im zusammengeschobenen Zustand, d.h. wenn der Verdichterkolben ganz in das Kolbengehäuse eingeschoben ist.

Die Gehäusewand kann als Zylinderbuchse ausgestaltet sein. Dabei kann die Zylinderbuchse in das Kolbengehäuse eingeschoben sein, so dass zwischen dem Kolbengehäuse und der Zylinderbuchse ein ringförmiger Innenraum entsteht, der durch einen Gasanschluss mit Gas beaufschlagt wird.

Die Gehäusewand kann aus einem Metall oder aus einem keramischen Material gefertigt sein.

Der Verdichterkolben kann ölfrei im Kolbengehäuse gelagert sein.

Die Gehäusewand weist Poren auf, deren mittlerer Durchmesser im Bereich von 0.005 mm bis 0.100 mm, insbesondere in einem Bereich von 0.01 mm bis 0.06 mm, vorzugsweise in einem Bereich von 0.02 mm bis 0.04 mm, liegt.

Durch eine derartige Bemessung der Porengrößen kann ein besonders gleichmäßiger Gasstrom durch die Gehäusewand bewirkt werden, welches zu einer gleichmäßigen und zuverlässigen Gaslagerung beiträgt, wodurch der Verschleiß am Verdichterkolben und/oder an der Gehäusewand verringert wird.

In einer Ausgestaltung ist der maximale Durchmesser der Poren kleiner als 0.13 mm, insbesondere kleiner als 0.08 mm, vorzugsweise kleiner als 0.05 mm.

Das erfindungsgemäße Kältegerät umfasst den erfindungsgemäßen Linearverdichter. Aufgrund der Betriebssicherheit, Störunanfälligkeit und einfachen Herstellbarkeit des Linearverdichters arbeitet das Kältegerät, z.B. ein Kühlschrank, ein Gefrierschrank oder eine Klimaanlage, insbesondere eine Klimaanlage für Kraftfahrzeuge, besonders störunanfällig und zuverlässig und ist auf einfache Weise herstellbar. Insbesondere ist aufgrund der besonderen Eigenschaften des erfindungsgemäßen Linearverdichters kein Vorfilter für das Gas erforderlich, welches die Herstellungskosten des Kältegerät weiter senkt.

Das erfindungsgemäße Verfahren zur Herstellung eines Linearverdichters bzw. zur Herstellung eines Kältegeräts umfassend einen Linearverdichter, wobei der Linearverdichter ein Kolbengehäuse und einen darin entlang einer Achse hin und her beweglichen Verdichterkolben umfasst, wobei der Verdichterkolben in dem Kolbengehäuse mit Hilfe einer Öffnungen aufweisenden Gehäusewand und eines durch die Öffnungen strömenden Gases gelagert wird, weist die folgenden Verfahrensschritte auf:
Ausbilden eines Verdichterkolbens und eines Kolbengehäuses mit einer Gehäusewand, die als Öffnungen Poren aufweist und bei der sich der lokale Durchtrittsströmungswiderstand durch die Gehäusewand entlang der Achse ändert;
Sintern der Gehäusewand.

Im Gegensatz zum Stand der Technik, der eine vergleichsweise aufwändige Herstellung des Linearverdichters vorsah, da die einzelnen Öffnungen in der Gehäusewand individuell hergestellt werden mussten, wird gemäß der vorliegenden Erfindung die Gehäusewand auf einfache Weise blockweise im wesentlichen durch einen Sinterprozessschritt hergestellt. Hierdurch werden die Herstellungskosten erheblich reduziert.

Das erfindungsgemäße Verfahren zum Kühlen von Waren verwendet das erfindungsgemäße Kältegerät. Es ist in der Lage, Waren, insbesondere Lebensmittel, zügig, zuverlässig und energiesparsam zu kühlen bzw. kühl zu halten.

Weitere Vorteile und besondere Weiterbildungen werden anhand der folgenden Zeichnung, die die Erfindung nicht einschränken sondern lediglich exemplarisch illustrieren soll, näher erläutert. Es zeigen schematisch:
Fig. 1 einen Linearverdichter im Querschnitt wie er aus dem Stand der Technik bekannt ist; und
Fig. 2 einen erfindungsgemäßen Linearverdichter im Querschnitt.

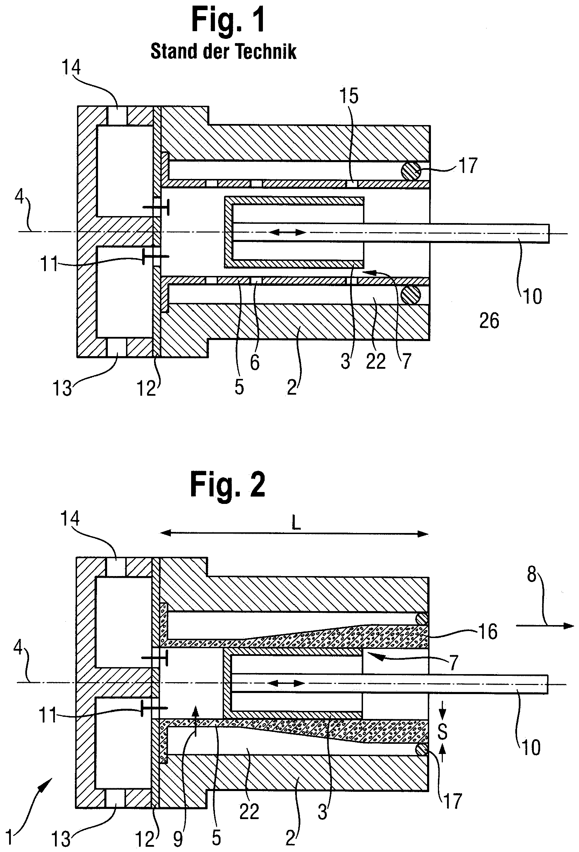

Fig. 1 zeigt einen Linearverdichter im Querschnitt wie er im Stand der Technik bekannt ist, mit einem Kolbengehäuse 2, in welchem ein Verdichterkolben 3 entlang einer Achse 4 hin und her beweglich ist. Der Verdichterkolben 3 wird mit Hilfe einer Gehäusewand 5, welche Öffnungen 6 aufweist, gelagert, indem ein Gaspolster 7 zwischen dem Verdichterkolben 3 und der Gehäusewand 5 mittels eines durch die Öffnungen 6 strömenden Gases aufgebaut wird. Ein Zwischenraum 22 zwischen der Gehäusewand 5 und dem Kolbengehäuse 2, der mit dem Gas beaufschlagt wird, wird mit Hilfe eines O-Rings 17 abgedichtet. Durch die Hin- und Herbewegung des Verdichterkolbens 3 mit Hilfe einer Kolbenstange 10 wird bei entsprechender Schaltung der Ventile 11 an einem Sauganschluss 14 gesaugt und an einem Druckanschluss 13 komprimiert. Die Öffnungen 6 sind als Mikrodüsen 15 ausgestaltet, welche mit optomechanischen Herstellungsverfahren hergestellt sind.

Fig. 2 zeigt den erfindungsgemäßen Linearverdichter 1 im Querschnitt. Dabei wird der Verdichterkolben 3 in einer Gaslagerhülse 16 geführt, deren Gehäusewand 5 aus gesintertem Material besteht, welches porös ist und eine Gasströmung 9 durchtreten lässt. Der lokale Durchtrittsströmungswiderstand durch die Gehäusewand 5 ändert sich entlang der Achse 4 dadurch, dass die Stärke S der Gehäusewand 5 über eine Länge L des Kolbengehäuses 2 sich ändert. In der konkreten Ausgestaltung sind nur geringere Lagerkräfte erforderlich, wenn der Verdichterkolben 3 in Ausziehrichtung 8 herausgezogen ist, so dass die Stärke S der Gehäusewand 5 in der Figur 2 rechts größer ist als links. Aufgrund der Porosität kann eine Gasströmung 9 lokal verschmutzte Poren lokal umströmen, weshalb nicht der gesamte Strömungspfad durch die Gehäusewand 5 blockiert wird, wenn sich eine Pore zusetzt, sondern lediglich ein Abschnitt.

Als strömendes Gas wird vorteilhafterweise das Kühlmittel verwendet, welches bei dem Kältegerät zum Einsatz kommt.

Die Erfindung betrifft einen Linearverdichter 1 sowie ein Verfahren zur Herstellung desselben umfassend ein Kolbengehäuse 2 und einen darin entlang einer Achse 4 hin und her beweglichen Verdichterkolben 3, wobei der Verdichterkolben 3 in dem Kolbengehäuse 2 mit Hilfe einer Öffnungen 6 aufweisenden Gehäusewand 5 und eines durch die Öffnungen 6 strömenden Gases gelagert wird, wobei die Gehäusewand 5 porös, insbesondere gesintert, ist, zeichnet sich durch eine hohe Zuverlässigkeit im Betrieb aus.

## Patentansprüche

1. Linearverdichter (1) umfassend ein Kolbengehäuse (2) und einen darin entlang einer Achse (4) hin und her beweglichen Verdichterkolben (3), wobei der Verdichterkolben (3) in dem Kolbengehäuse (2) mit Hilfe einer Öffnungen aufweisenden Gehäusewand (5) und eines durch die Öffnungen strömenden Gases gelagert wird, **dadurch gekennzeichnet, dass** die Öffnungen Poren sind und dass sich der lokale Durchtrittsströmungswiderstand durch die Gehäusewand (5) entlang der Achse (4) ändert.

2. Linearverdichter (1) nach Anspruch 1, **dadurch gekennzeichnet, dass** die Gehäusewand (5) offenporig ist.

3. Linearverdichter (1) nach Anspruch 1 oder 2, **dadurch gekennzeichnet, dass** die Gehäusewand (5) gesintert ist.

4. Linearverdichter (1) nach einem der Ansprüche 1 bis 3, **dadurch gekennzeichnet, dass** sich die Porosität der Gehäusewand (5), insbesondere der Materialanteil, entlang der Achse (4) ändert.

5. Linearverdichter (1) nach einem der vorhergehenden Ansprüche, **dadurch gekennzeichnet, dass** sich die Stärke (s) der Gehäusewand (5) ändert.

6. Linearverdichter (1) nach Anspruch einem der vorhergehenden Ansprüche, **dadurch gekennzeichnet, dass** sich der Strömungswiderstand, insbesondere die Stärke (s) der Gehäusewand (5), über die Länge (I) des Kolbengehäuses (2) in einem Bereich von 1,5 bis 6, insbesondere in einem Bereich von 2 bis 4, ändert.

7. Linearverdichter (1) nach einem der vorhergehenden Ansprüche, **dadurch gekennzeichnet, dass** der lokale Durchtrittsströmungswiderstand entlang der Achse (4) in Ausziehrichtung (8) des Verdichterkolbens (3) aus dem Kolbengehäuse (2) zunimmt.

8. Linearverdichter (1) nach einem der vorhergehenden Ansprüche, **dadurch gekennzeichnet, dass** die Gehäusewand (5) als Zylinderbuchse ausgestaltet ist.

9. Linearverdichter (1) nach einem der vorhergehenden Ansprüche, **dadurch gekennzeichnet, dass** die Gehäusewand (5) aus einem Metall ist.

10. Linearverdichter (1) nach einem der vorhergehenden Ansprüche, **dadurch gekennzeichnet, dass** die Gehäusewand (5) aus einem keramischen Material ist.

11. Linearverdichter (1) nach einem der vorhergehenden Ansprüche, **dadurch gekennzeichnet, dass** der Verdichterkolben (3) ölfrei im Kolbengehäuse (2) gelagert ist.

12. Linearverdichter (1) nach einem der vorhergehenden Ansprüche, **dadurch gekennzeichnet, dass** der mittlere Durchmesser der Poren im Bereich von 0.005 mm bis 0.100 mm, insbesondere in einem Bereich von 0.01 mm bis 0.06 mm, vorzugsweise in einem Bereich von 0.02 mm bis 0.04 mm, liegt.

13. Linearverdichter (1) nach Anspruch 12, **dadurch gekennzeichnet, dass** der maximale Durchmesser der Poren kleiner als 0.13 mm, insbesondere kleiner als 0.08 mm, vorzugsweise kleiner als 0.05 mm, ist.

14. Kältegerät umfassend einen Linearverdichter (1) nach einem der Ansprüche 1 bis 13.

15. Verfahren zur Herstellung eines Linearverdichters (1) bzw. eines Kältegerät umfassend einen Linearverdichter (1), wobei der Linearverdichter (19) ein Kolbengehäuse (2) und einen darin entlang einer Achse (4) hin und her beweglichen Verdichterkolben (3) umfasst, wobei der Verdichterkolben (3) in dem Kolbengehäuse (2) mit Hilfe einer Öffnungen aufweisenden Gehäusewand (5) und eines durch die Öffnungen strömenden Gases gelagert wird, umfassend die folgenden Verfahrenschritte:
a) Ausbilden einer Gehäusewand (5), die als Öffnungen Poren aufweist und bei der sich der lokale Durchtrittsströmungswiderstand durch die Gehäusewand (5) entlang der Achse (4) ändert;
b) Sintern der Gehäusewand (5).

16. Verfahren zum Kühlen von Waren mit Hilfe eines Kältegeräts nach Anspruch 14.

## Claims

1. Linear compressor (1) comprising a piston housing (2) and a compressor piston (3) movable back and forth therein along an axis (4), the compressor piston (3) being supported in the piston housing (2) by means of a housing wall (5) having openings and by means of gas flowing through the openings, **characterised in that** the openings are pores and that the local flow resistance through the housing wall (5) varies along the axis (4).

2. Linear compressor (1) according to claim 1, **characterised in that** the housing wall (5) is open-pored.

3. Linear compressor (1) according to claim 1 or 2, **characterised in that** the housing wall (5) is sintered.

4. Linear compressor (1) according to one of claims 1 to 3, **characterised in that** the porosity of the housing wall (5), in particular the material content, varies along the axis (4).

5. Linear compressor (1) according to one of the preceding claims, **characterised in that** the thickness (s) of the housing wall (5) varies.

6. Linear compressor (1) according to one of the preceding claims, **characterised in that** the flow resistance, in particular the thickness (s) of the housing wall (5), varies over the length (1) of the piston housing (2) within a range from 1.5 to 6, in particular within a range from 2 to 4.

7. Linear compressor (1) according to one of the preceding claims, **characterised in that** the local through-flow resistance along the axis (4) increases in the retraction direction (8) of the compressor piston (3) from the piston housing (2).

8. Linear compressor (1) according to one of the preceding claims, **characterised in that** the housing wall (5) is in the form of a cylinder liner.

9. Linear compressor (1) according to one of the preceding claims, **characterised in that** the housing wall (5) is made of a metal.

10. Linear compressor (1) according to one of the preceding claims, **characterised in that** the housing wall (5) is made of a ceramic material.

11. Linear compressor (1) according to one of the preceding claims, **characterised in that** the compressor piston (3) is supported in the piston housing (2) in an oil-free manner.

12. Linear compressor (1) according to one of the preceding claims, **characterised in that** the mean diameter of the pores is in the range from 0.005 mm to 0.100 mm, in particular in a range from 0.01 mm to 0.06 mm, preferably in a range from 0.02 mm to 0.04 mm.

13. Linear compressor (1) according to claim 12, **characterised in that** the maximum diameter of the pores is less than 0.13 mm, in particular less than 0.08 mm, preferably less than 0.05 mm.

14. Refrigeration device including a linear compressor (1) according to one of claims 1 to 13.

15. Method for producing a linear compressor (1) or a refrigeration device including a linear compressor (1), the linear compressor (19) comprising a piston housing (2) and a compressor piston (3) movable back and forth therein along an axis (4), the compressor piston (3) being supported in the piston housing (2) by means of a housing wall (5) having openings and by means of a gas flowing through the openings, comprising the following process steps:
a) forming of a housing wall (5) which has pores as openings and in which the local flow resistance through the housing wall (5) varies along the axis (4);
b) sintering of the housing wall (5).

16. Method for cooling merchandise by means of a refrigeration device according to claim 14.

## Revendications

1. Compresseur linéaire (1) comprenant un boîtier de piston (2) et un piston de compression (3) déplaçable en va-et-vient dans le boîtier de piston le long d'un axe (4), le piston de compression (3) étant logé dans le boîtier de piston (2) à l'aide d'une paroi de logement (5) présentant des ouvertures et d'un gaz affluant à travers les ouvertures, **caractérisé en ce que** les ouvertures sont des pores et **en ce que** la résistance locale à l'écoulement à travers la paroi de logement (5) se modifie le long de l'axe (4).

2. Compresseur linéaire (1) selon la revendication 1, **caractérisé en ce que** la paroi de boîtier (5) est à pores ouverts.

3. Compresseur linéaire (1) selon la revendication 1 ou 2, **caractérisé en ce que** la paroi de boîtier (5) est frittée.

4. Compresseur linéaire (1) selon l'une quelconque des revendications 1 à 3, **caractérisé en ce que** la porosité de la paroi de logement (5), notamment la proportion de matériau, se modifie le long de l'axe (4).

5. Compresseur linéaire (1) selon l'une quelconque des revendications précédentes, **caractérisé en ce que** l'épaisseur (s) de la paroi de logement (5) se modifie.

6. Compresseur linéaire (1) selon l'une quelconque des revendications précédentes, **caractérisé en ce que** la résistance à l'écoulement, notamment l'épaisseur (s) de la paroi de logement (5), se modifie dans une plage de 1,5 à 6, notamment dans une plage de 2 à 4 sur la longueur (I) du boîtier de piston (2).

7. Compresseur linéaire (1) selon l'une quelconque des revendications précédentes, **caractérisé en ce que** la résistance locale à l'écoulement le long de l'axe (4) augmente en direction d'extraction (8) du piston de compression (3) hors du boîtier de piston (2).

8. Compresseur linéaire (1) selon l'une quelconque des revendications précédentes, **caractérisé en ce que** la paroi de boîtier (5) est conçue comme chemise de cylindre.

9. Compresseur linéaire (1) selon l'une quelconque des revendications précédentes, **caractérisé en ce que** la paroi de boîtier (5) est constituée d'un métal.

10. Compresseur linéaire (1) selon l'une quelconque des revendications précédentes, **caractérisé en ce que** la paroi de boîtier (5) est constituée d'une matière céramique.

11. Compresseur linéaire (1) selon l'une quelconque des revendications précédentes, **caractérisé en ce que** le piston de compression (3) est logé dans le boîtier de piston (2) en étant exempt d'huile.

12. Compresseur linéaire (1) selon l'une quelconque des revendications précédentes, **caractérisé en ce que** le diamètre moyen des pores se situe dans la plage de 0,005 mm à 0,100 mm, notamment dans une plage de 0,01 mm à 0,06 mm, de préférence dans une plage de 0,02 mm à 0,04 mm.

13. Compresseur linéaire (1) selon la revendication 12, **caractérisé en ce que** le diamètre maximal des pores est inférieur à 0,13 mm, notamment inférieur à 0,08 mm, de préférence inférieur à 0,05 mm.

14. Appareil frigorifique comprenant un compresseur linéaire (1) selon l'une quelconque des revendications 1 à 13.

15. Procédé de fabrication d'un compresseur linéaire (1) resp. d'un appareil frigorifique comprenant un compresseur linéaire (1), le compresseur linéaire (1) comprenant un boîtier de piston (2) et un piston de compression (3) déplaçable en va-et-vient dans le boîtier de piston le long d'un axe (4), le piston de compression (3) étant logé dans le boîtier de piston (2) à l'aide d'une paroi de logement (5) présentant des ouvertures et d'un gaz affluant à travers les ouvertures, comprenant les étapes de procédé suivantes :
a) réalisation d'une paroi de boîtier (5) qui présente des pores en tant qu'ouvertures et dans laquelle la résistance locale à l'écoulement à travers la paroi de logement (5) se modifie le long de l'axe (4) ;
b) frittage de la paroi de boîtier (5).

16. Procédé de refroidissement de marchandises à l'aide d'un appareil frigorifique selon la revendication 14.
